# EUROPEAN PATENT APPLICATION

(11) **EP 2 846 322 A1**
(43) Date of publication of application: **11.03.2015**
(21) Application number: 13775475.0
(22) Date of filing: 12.04.2013
(51) Int. Cl.: G09B 9/00, A63G 31/16, A63B 22/16

(54) **MOTION SIMULATOR**

(30) Priority: 12.04.2012 KR 20120037723
(71) Applicant: Motion Device Inc., Gyeonggi-do 429-793 (KR)
(72) Inventor: LEE, Jong Chan, Anyang-si Gyeonggi-do 431-070 (KR); KANG, Yu Sin, Seoul 153-011 (KR); CHUN, Sang Gon, Yongin-si Gyeonggi-do 448-739 (KR); JUNG, Dea Sung, Seoul 133-121 (KR)
(74) Representative: Habermann, Hruschka & Schnabel
(86) International application number: PCT/KR2013/003087
(87) International publication number: WO 2013/154386

(57) **Abstract**

The motion simulator of the present invention comprises: a base frame; a support member arranged above the base frame so as to support a monitor and a handle; a first link part, the top of which is connected to a rear end of the support member such that the top of the first link part can rotate in roll and pitch, and the bottom of which is connected to a rear end of the base frame such that the bottom of the first link part can be rotated in pitch, the first link unit transmitting the power from first driving units so as to move the rear end of the support member in the upward and downward directions; a second link part and a third link part, the tops of which are connected to the left and right ends of the support member, respectively, such that the tops of the second and third link parts can be rotated in roll and pitch, and the bottoms of which are connected to left and right sides of the base frame, respectively, such that the bottoms of the second and third link parts can be rotated in roll and pitch, the second and third link parts transmitting the power from second driving units and third driving units so as to move the left and right sides of the support member in the upward and downward directions; and a fourth link part, the two ends of which are linked to the first link unit and to the base frame, respectively, such that the two ends of the fourth link part can be rotated in pitch, the fourth link part transmitting power from fourth driving units so as to rotate the first link part in pitch.

## Description

### TECHNICAL FIELD

The present invention relates to a motion simulator, and more particularly, to a motion simulator capable of five degrees of freedom (DOF) motion through a simple structure thereof.

### BACKGROUND ART

In general, motion simulators are devices that reproduce dynamic changes to match the motion of users with virtual environments controlled by computers so that the users may feel like they are moving in the virtual environment. Motion simulators may realize flight or driving simulations. Motion simulators are now being widely used as simulators for games or theaters so that the users may experience three dimensional movements.

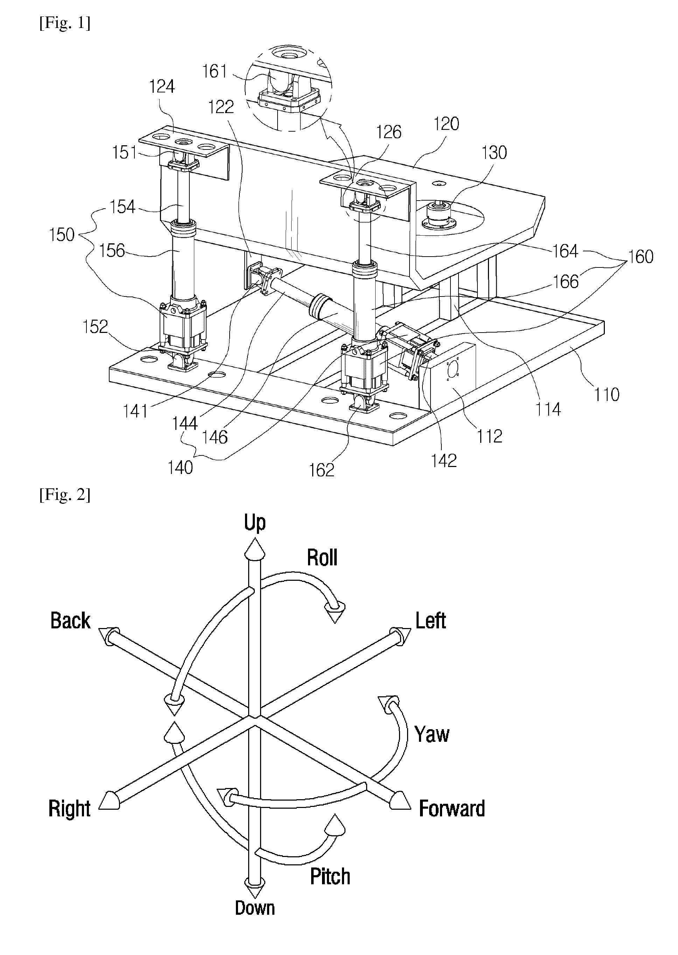

As a simulator according to the related art, a motion base for a virtual reality motion simulator is disclosed in Korean Patent Registration No. 10-0932231. As illustrated in FIG. 1, the simulator includes a support frame 110, an operation frame 120, a central pivot joint 130, a horizontal actuator 140, and first and second vertical actuators 150 and 160 to rotate in three degrees of freedom with respect to the central pivot joint 130.

The above-described simulator according to the related art has a structure in which the first or second vertical actuator 150 or 160 is driven to vertically move rods 154 and 164, thereby rotating the operation frame 120, and the horizontal actuator 140 is driven to horizontally move a rod 144, thereby rotating the operation frame 120, and thus the simulator realizes a rotation in three degrees of freedom(DOF).

However, according to the above-described structure, since a low degree of freedom is realized, it may be difficult for a user to experience a virtual environment as reality. Also, since the horizontal actuator 140 is installed to cross the base in a horizontal direction, when an additional actuator for realizing a higher degree of freedom is installed, the structure may become complicated.

### DISCLOSURE OF THE INVENTION

### TECHNICAL PROBLEM

The present invention is provided to solve the above-described problems. An object of the present invention is to provide a motion simulator capable of at most five degrees of freedom (DOF) motion through a more simple structure thereof.

### TECHNICAL SOLUTION

A motion simulator according to the present invention to achieve the above object includes: a base frame (10); support members (30, 40) disposed above the base frame (10) to support a chair (1) on which a user sits down, a monitor (2) providing a virtual environment with an image according to manipulation by the user, and a handle (3) manipulated by the user to provide the virtual environment; a first link part (50) having an upper end rollably and pitchably connected to a rear end of the support member and a lower end pitchably connected to a rear end of the base frame (10), the first link part (50) transmitting a power of a first driving unit to move the rear end of the support member upward and downward; second and third link parts (60, 70) each of which has an upper end rollably and pitchably connected to both left and right ends of the support member and a lower end rollably and pitchably connected to left and right ends of the base frame (10), the second and third link parts (60, 70) transmitting powers of the second and third driving units to move both left and right sides of the support member upward and downward; and a fourth link part (80) having both ends pitchably connected to the first link part (50) and the base frame (10), the fourth link part (80) transmitting a power of the fourth driving unit to pitch the first link part (50).

In this case, the first to fourth driving units may be disposed in the base frame.

The first link part (50) may include: a first link member (51) having a lower end pitchably connected to the base frame (10); and a first rod (52) sliding in the first link member (51) by the first driving unit, the first rod (52) having an upper end rollably and pitchably connected to the support member, wherein the second and third link parts (60, 70) may include: second and third link members (61, 71) each of which has a lower end rollably and pitchably connected to the base frame (10); and second and third rods (62, 72) respectively sliding in the second and third link members (61, 71) by the second and third driving units, the second and third rods (62, 72) being rollably and pitchably connected to the support member, wherein the fourth link part (80) may include: a fourth link member (81) having one end pitchably connected to the base frame (10); and a fourth rod (82) sliding in the fourth link member (81) by the fourth driving unit, the fourth rod (82) being pitchably connected to the first link member (51).

The support member may include: a first support member (30) to which the chair (1) is coupled to a rear side thereof, and the monitor 2 is coupled to a front side thereof; and a second support member (40) coupled to the handle (3), the second support member being integrally coupled to the first support member (30), wherein the first link part (50) is rollably and pitchably connected to a rear end of the first support member (30), and the second and third link parts (60, 70) are rollably and pitchably connected to both left and right ends of the second support member (40), respectively.

The motion simulator may further include a fifth link part (90) having an upper end pitchably connected to a front end of the support members (30, 40) and a lower end pitchably connected to the base frame (10).

The fifth link part (90) may include: a fifth link member (91) having a predetermined length; a fifth rod (92) inserted into the fifth link member (91) to vertically slide; a fifth upper connection member (93) having one end pitchably connected to an upper end of the fifth rod (92) and the other end fixedly coupled to the front end of the support member (30); and a fifth lower connection member (94) having one end connected to the fifth link member (91) to pitch the fifth link member (91) and the other end fixedly coupled to the base frame (10), wherein the fifth rod (92) vertically moves by the motion of the support members (30, 40) due to driving forces of the first to fourth driving units.

The first link part (50) may include: a first link member (51) having a lower end pitchably connected to the base frame (10); a first rod (52) sliding in the first link member (51) by the first driving unit; and a first upper connection member (53) having one end rollably connected to a rear end of the support member and the other end pitchably connected to the first rod (52), wherein the fifth link part (90) may include: a fifth link member (91) having a predetermined length; a fifth rod (92) inserted into the fifth link member (91) to vertically slide; a fifth upper connection member (93) having one end pitchably connected to an upper end of the fifth rod (92) and the other end fixedly coupled to a front end of the support member (30); and a fifth lower connection member (94) having one end connected to the fifth link member (91) to pitch the fifth link member (91) and the other end fixedly coupled to the base frame (10), wherein the first upper connection member (53) and the fifth upper connection member (93) may be coaxially disposed.

Each of the first link member (51) and the fifth link member (91) may have a lower portion having a width greater than that of an upper portion thereof.

The motion simulator may further include a rotation support plate (20) supporting a lower portion of the base frame (10) and guiding rotation of the base frame (10) when the base frame (10) rotates by a rotation driving force of a rotation driving unit.

### ADVANTAGEOUS EFFECTS

According to the present invention, since the motion simulator moves in at most five degrees of freedom (DOF), the user may experience a more realistic virtual environment.

Also, the motion simulator may move in five DOF and prevent the large torque and torsion from being applied to the link part supporting the support member, thereby improving the durability.

### BRIEF DESCRIPTION OF THE DRAWINGS

FIG. 1 is a perspective view of a motion simulator according to a related art.
FIG. 2 is a view for explaining a degree of freedom.
FIG. 3 is a perspective view of a motion simulator according to a first embodiment of the present invention.
FIG. 4 is a side view of the motion simulator according to the first embodiment of the present invention.
FIGS. 5 and 6 are views illustrating a state where the motion simulator ascends according to the first embodiment of the present invention.
FIG. 7 is a view illustrating a state where the motion simulator is moved and tilted forward according to the first embodiment of the present invention.
FIG. 8 is a view illustrating a state where the motion simulator is moved and tilted forward and ascends according to the first embodiment of the present invention.
FIG. 9 is a view illustrating a state where the motion simulator is moved and tilted backward according to the first embodiment of the present invention.
FIG. 10 is a view illustrating a state where the motion simulator is moved and tilted backward and ascends according to the first embodiment of the present invention.
FIG. 11 is a view illustrating a state where the motion simulator is tilted to allow a right side thereof to ascend in a state where the motion simulator moves backward according to the first embodiment of the present invention.
FIG. 12 is a view illustrating a state where the motion simulator is tilted to allow the right side to ascend in a state where the motion simulator moves forward according to the first embodiment of the present invention.
FIGS. 13 and 14 are perspective views of a motion simulator according to a second embodiment of the present invention.
FIG. 15 is a side view of the motion simulator according to the second embodiment of the present invention.
FIG. 16 is a view illustrating a state where the motion simulator is moved and tilted forward according to the second embodiment of the present invention.
FIG. 17 is a view illustrating a state where the motion simulator is moved and tilted backward according to the second embodiment of the present invention.
FIG. 18 is a view illustrating a state where the motion simulator is tilted to a right side thereof to ascend according to the second embodiment of the present invention.

### **DESCRIPTION OF THE SYMBOLS IN MAIN PORTIONS OF THE DRAWINGS**

| | | | |
|---|---|---|---|
| 1: | Chair | 2: | Monitor |
| 3: | Handle | 4: | Pedal |
| 10: | Base frame | 11: | Wheel |
| 20: | Rotation support plate | 21: | Rotation guide |
| 22: | Motor | 22a: | Gear |
| 23: | Gear connection plate | 24: | Rotation shaft |
| 30: | First support member | 31: | Chair support |
| 32: | Monitor support | 40: | Second support member |
| 41: | Handle fixing part | 42: | Vertical connection part |
| 50: | First link part | 51: | First link member |
| 52: | First rod | 53: | First upper connection member |
| 54: | First lower connection member | 60: | Second link part |
| 61: | Second link member | 62: | Second rod |
| 63: | Second upper connection member | 64: | Second lower connection |
| | | | |
| 70: | Third link part | 71: | Third link member |
| 72: | Third rod | 73: | Third upper connection member |
| 74: | Third lower connection member | 80: | Fourth link part |
| 81: | Fourth link member | 82: | Fourth rod |
| 83: | Fourth upper connection member | 84: | Fourth lower connection member |
| 90: | Fifth link part | 91: | Fifth link member |
| 92: | Fifth rod | 93: | Fifth upper connection member |
| 94: | Fifth lower connection member | | |

### MODE FOR CARRYING OUT THE INVENTION

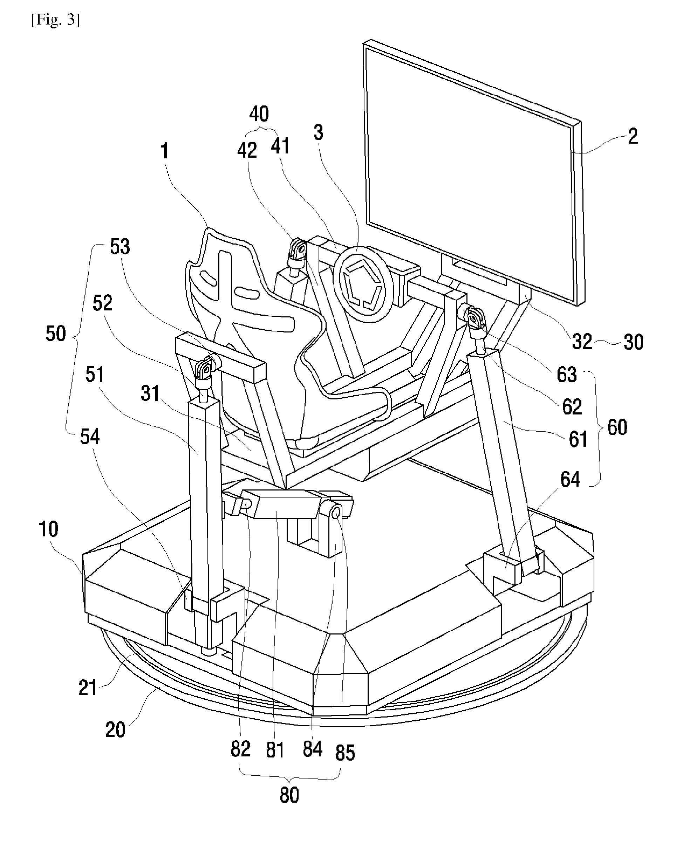

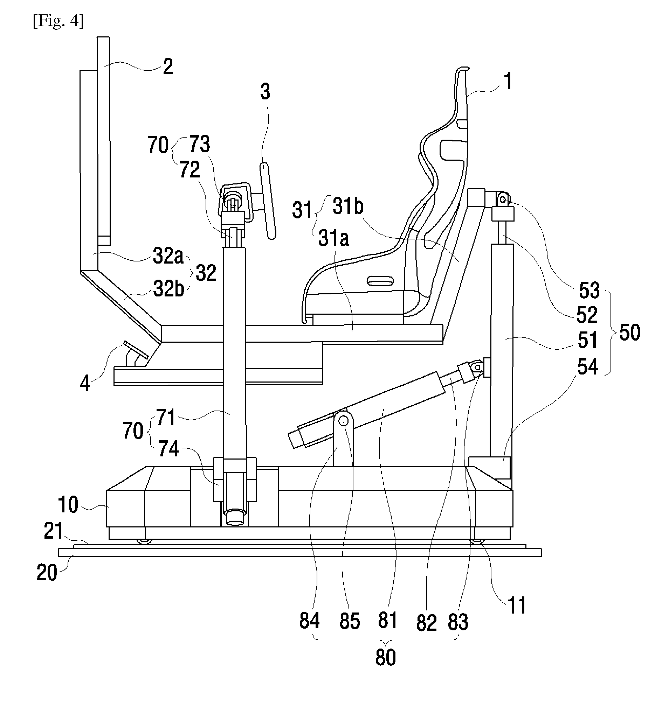

FIG. 2 is a view for explaining a degree of freedom, FIG. 3 is a perspective view of a motion simulator according to a first embodiment of the present invention, and FIG. 4 is a side view of the motion simulator according to the first embodiment of the present invention.

First, moving and rotating directions and degree of freedom will be described with reference to FIG. 2. In a space, there are six motions of an object, which include a forward/backward motion (Z-axis) in which the object moves forward and backward, a left/right motion (X-axis) in which the object moves in a left/right direction, an up/down motion (Y-axis) in which the object vertically moves, rolling in which the object rotates with respect to the Z-axis, pitching in which the object rotates with respect to the X-axis, and yawing in which the object rotates with respect to the Y-axis. The six motions are called six degrees of freedom (DOF).

Hereinafter, as defined in FIG. 2, an axis connecting the right side to the left side refers to an X-axis, an axis connecting the upside to the downside refers to an Y-axis, and an axis connecting the front side to the rear side refers to a Z-axis, and then moving and rotating directions with respect to the X, Y, and Z axes will be described.

A motion simulator of the present invention includes a base frame 10, a rotation support plate 20 supporting a lower portion of the base frame 10, support members 30 and 40 for supporting a chair 1 on which a user sits down, a monitor 2 providing a virtual environment with an image according to manipulation by the user, and a handle 3 manipulated by the user so as to provide the virtual environment, and first to fourth link parts 50, 60, 70, and 80 connecting between the base frame 10 and the support members 30 and 40.

The base frame 10 supporting an entire structure of the motion simulator of the present invention may have an approximately hexahedral shape and a plurality of driving units providing a power to the first to fourth link parts 50 to 80 therein. A motor, a cylinder, and a linear actuator may be used as the plurality of driving units.

The rotation support plate 20 may be disposed between the ground and the base frame 10 to support the base frame 10. Also, a rotation guide 21 may protrude upward from a top surface of the rotation support plate 20 by predetermined width and height, and thus the base frame 10 may rotate by a rotation force transmitted from a rotation driving unit (not shown) while being guided by the rotation guide 21.

A plurality of wheels 11 may be disposed on a lower surface of the base frame 10 so that the base frame 10 rotates while being guided by the rotation guide 21. The rotation guide may have a circular band shape along a circumference of an edge of the top surface of the rotation support 20.

The motion simulator according to the present invention may be provided to realize virtual reality through which the user experiences vehicle traveling. Then, the motion simulator may include the chair 1 on which the user sits down, the monitor 2 providing the virtual environment with the image according to the manipulation by the user, the handle 3 by which the user manipulates a driving direction, and a pedal 4 by which velocity of a vehicle is adjusted. Here, the above-described components may be substituted with other components according to the usage of the motion simulator.

Vehicle moving direction data according to the manipulation of the handle 3 and vehicle velocity data according to the manipulation of the pedal 4 may be inputted into a controller (not shown). On the basis of the inputted data, the virtual environment in which the user feels like that he/she is actually driving the vehicle may be provided on the monitor 2 with the image by coupling a preset virtual environment data to the inputted vehicle moving direction and velocity data.

The support members 30 and 40 may be constituted by a first support member 30 on which the monitor 2 and the chair 1 are respectively coupled to front and rear sides thereof and a second support member 40 to which the handle 3 is coupled. The first and second support members 30 and 40 are integrally coupled to each other.

Here, the term 'front side' refers to a direction where the user looks when the user sits down on the chair 1, and the term 'rear side' refers to a direction opposite to that where the user looks. Hereinafter, the terms 'front, back, left, and right directions' are defined on the basis of the above-described directions.

The first support member 30 is constituted by a chair support 31 and a monitor support 32. The chair support 31 may have an approximately 'L' shape section and include a horizontal part 31 a having a top surface to which the chair 1 is fixedly coupled and connection parts 31 b tiltedly extending upward from a rear end of the horizontal part 31 a. The monitor support 32 includes a monitor coupling part 32a to which the monitor 2 is vertically fixed and coupled and a connection part 32b tilted downward from a lower end of the monitor coupling part 32a and then connected to a front end of the horizontal part 31 a.

The second support member 40 is provided to fixedly support the handle 3. The second support member 40 may be constituted by a handle fixing part 41 that is horizontally provided so that the handle 3 is fixedly coupled to the handle fixing part 41 and connection parts 42 tilted downward from both ends of the handle fixing part 41 so that the horizontal part 31 a of the chair support 31 is connected to the connection parts 42.

Since the chair 1, the monitor 2, the handle 3, and the first and second support members 30 and 40 are integrally coupled to each other to integrally move when a driving force is transmitted thereto by the driving unit.

The support members 30 and 40 may be connected to the base frame 10 by the four link parts 50, 60, 70, and 80.

The first link part 50 has an upper end connected to a rear side of the first support member 30 so as to roll and pitch the rear side of the first support member 30, and a lower end connected to a rear side of the base frame 10 so as to pitch the rear side of the base frame 10. The first link part 50 includes a first link member 51 having a predetermined length, a first rod 52 inserted into the first link member 51 to vertically and linearly slide by driving of the first driving unit (not shown), a rolling and pitching-rotatable first upper connection member 53 disposed on an upper end of the first rod 52 and connected to the rear side of the first support member 30, and a pitching-rotatable first lower connection member 54 connecting a lower end of the first link member 51 to the rear side of the base frame 10.

The first lower connection member 54 may have one side fixedly coupled to the base frame 10 and the other side connected to the lower end of the first link member 51 by using a rotation shaft (not shown), which is the center of rotation, as a medium in a front/rear direction so that rolling rotation is prevented but pitching rotation is allowed so as to prevent the user from falling down in a left/right direction in a state where the user sits down on the chair when the simulator operates.

The first driving unit may be a motor or a cylinder and may be disposed in the base frame 10 or in the first link member 51. Also, when a linear actuator using a motor is used as the driving unit, the driving unit may not be disposed in the base frame 10, but may be directly coupled to the first link member 51 and disposed outside the base frame 10.

The second link part 60 may have a rolling and pitching-rotatable upper end connected to a right end of the second support member 40 and a rolling and pitching-rotatable lower end connected to a right end of the base frame 10. The third link part 70 may have a rolling and pitching-rotatable upper end connected to a left end of the second support member 40 and a rolling and pitching-rotatable lower end connected to the right end of the base frame 10.

The second link part 60 includes a second link member 61 having a predetermined length, a second rod 62 inserted into the second link member 61 to vertically and linearly slide by driving of a second driving unit (not shown), a rolling and pitching-rotatable second upper connection member 63 disposed on an upper end of the second rod 62 and connected to the right end of the second support member 40, and a rolling and pitching-rotatable second lower connection member 64 connecting a lower end of the second link member 61 to the right end of the base frame 10.

The second lower connection member 64 may have pitching-rotatable one side connected to the base frame 10 by using the rotation shaft (not shown) as a medium and have rolling-rotatable the other side connected to the lower end of the second link member 61 by using the rotation shaft (not shown) as a medium. Thus, the second lower connection member 64 may roll and pitch.

The third link part 70 has the same constitutions as that of the second link part 60. The third link part 70 includes a third link member 71 having a predetermined length, a third rod 72 inserted into the third link member 71 to vertically and linearly slide by driving of a third driving unit (not shown), a rolling and pitching-rotatable third upper connection member 73 disposed on an upper end of the third rod 72 and connected to the left end of the second support member 40, and a rolling and pitching-rotatable third lower connection member 74 connecting a lower end of the third link member 71 to a left end of the base frame 10.

The third lower connection member 74 may have pitching-rotatable one side connected to the base frame 10 by using the rotation shaft (not shown) as a medium and rolling-rotatable the other side connected to the lower end of the third link member 71 by using the rotation shaft (not shown) as a medium. Thus, the third lower connection member 74 may roll and pitch.

The second link part 60 and the third link part 70 may be different from the first link part 50 in that the second and third parts 60 and 70 are rollably and pitchably connected to the base frame 10. Also, the second link part 60 and the third link part 70 may be the same as the first link part 50 in that the linear actuator may be used by directly coupling the linear actuator to the second and third link members 61 and 71.

The fourth link part 80 may apply a driving force so that the first link part 50 may pitch by using a link connection part of the lower end thereof as a center of rotation. Also, the fourth link part 80 has pitching-rotatable one end connected to a body of the first link member 51 and pitching-rotatable the other end connected to the top surface of the base frame 10 so that rolling rotation is prevented so as to prevent the user from falling down in the left/right direction in a state where the user sits down on the chair when the simulator operates.

The fourth link part 80 includes a fourth link member 81 having a predetermined length, a fourth rod 82 inserted into the fourth link member 81 to vertically and linearly slide by driving of a fourth driving unit (not shown), a pitching-rotatable fourth upper connection member 83 disposed on an upper end of the fourth rod 82 and connected to a body of the first link member 51, and a fourth lower connection member 84 connecting a lower end of the fourth link member 81 to a top surface of the base frame 10 so that the fourth link member 81 may pitch. The fourth lower connection member 84 may be connected to the fourth link member 81 by using a rotation shaft 85 as a medium to pitch.

The fourth link part 80 may be the same as the first link part 50 in that a motor or a cylinder may be used as the fourth driving unit, and a linear actuator may be directly coupled to the fourth link member 81.

The rotation driving unit may be disposed between the base frame 10 and the rotation support plate 20 to rotate the base frame 10 in a state where a bottom surface of the rotation driving unit is fixedly supported by the rotation support plate 20. In this case, since the bottom surface of the rotation driving unit is fixedly supported by the rotation support plate 20, the rotation driving unit may not rotate and the base frame 10 and all of the support members 30 and 40 to which the chair 10 and the monitor 2 are coupled may yaw by the driving force of the rotation driving unit. When the base frame 10 rotates, the base frame 10 may rotate while the wheels 11 attached to a bottom surface of the base frame 10 are guided by the rotation guide 21 formed on the top surface of the rotation support plate 20.

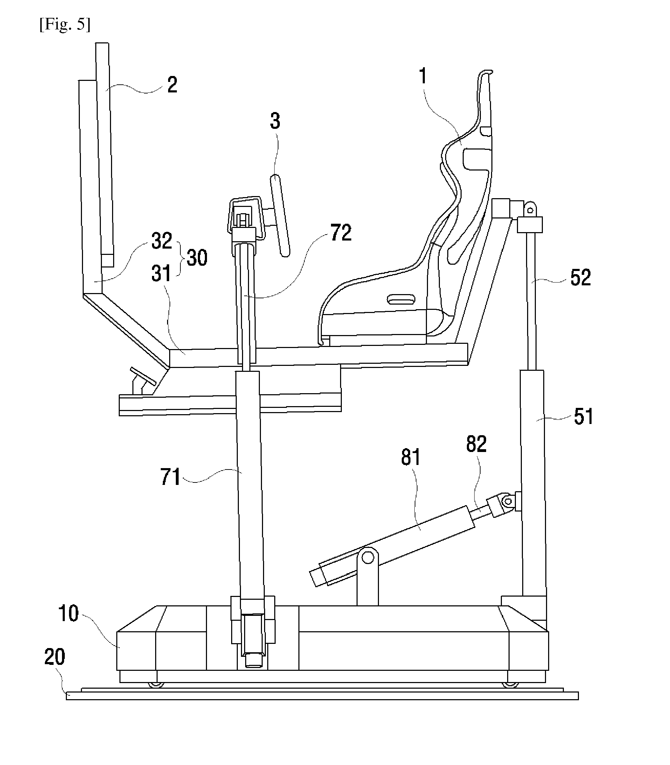

Hereinafter, motion of the motion simulator according to the first embodiment of the present invention will be described with reference to FIGS. 5 to 12.

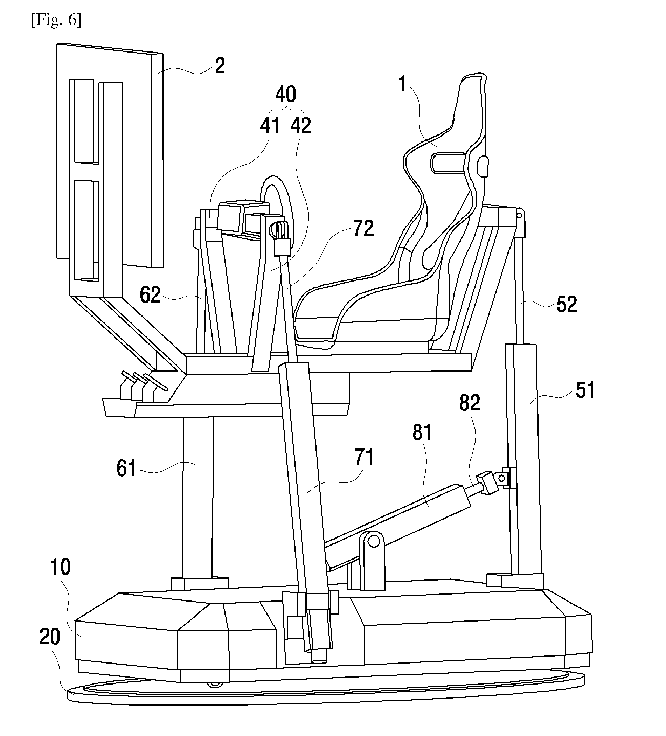

FIGS. 5 and 6 are views illustrating a state where the motion simulator ascends according to the first embodiment of the present invention.

As illustrated in FIGS. 5 and 6, the first, second, and third driving units are driven to slide the first, second, and third rods 52, 62, and 72 upward, and thus the first, second and third rods 52, 62, and 72 are in an ascending state.

Like this, in the process in which the first, second, and third rods 52, 62, and 72 are slid upward, the second upper and lower connection members 63 and 64 and the third upper and lower connection members 70 and 74, which are the upper and lower ends of the second and third link parts 60 and 70, may rotate so that the second and third link members 61 and 71 are spaced a predetermined angle apart from each other in the left/right direction.

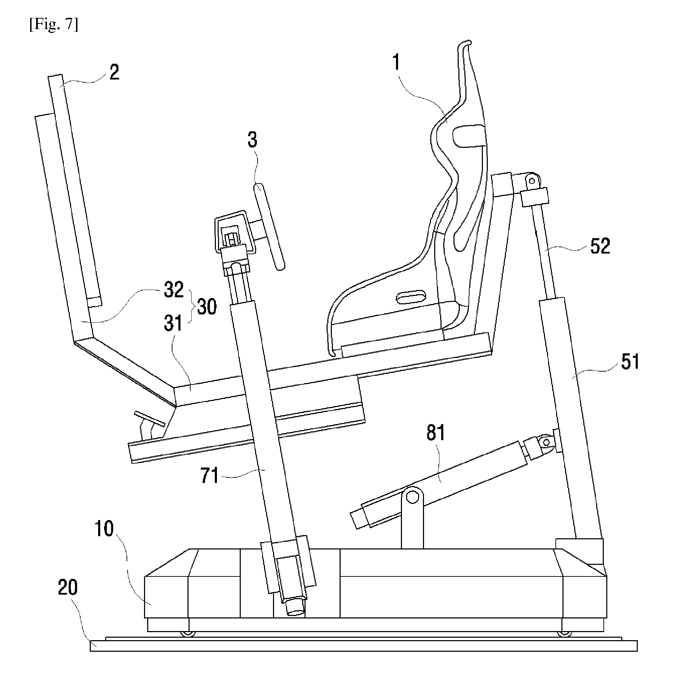

FIG. 7 is a view illustrating a state where the motion simulator is moved and tilted forward according to the first embodiment of the present invention.

As illustrated in FIG. 7, when the first driving unit is driven to slide the first rod 52 upward, and the fourth driving unit is driven to slide the fourth rod 82 forward, the user may be in a forward tilted and moved state.

In this case, a forward tilted angle may be adjusted by elevating the second and third rods 62 and 72 by using the second and third driving units of the second and third link parts 60 and 70.

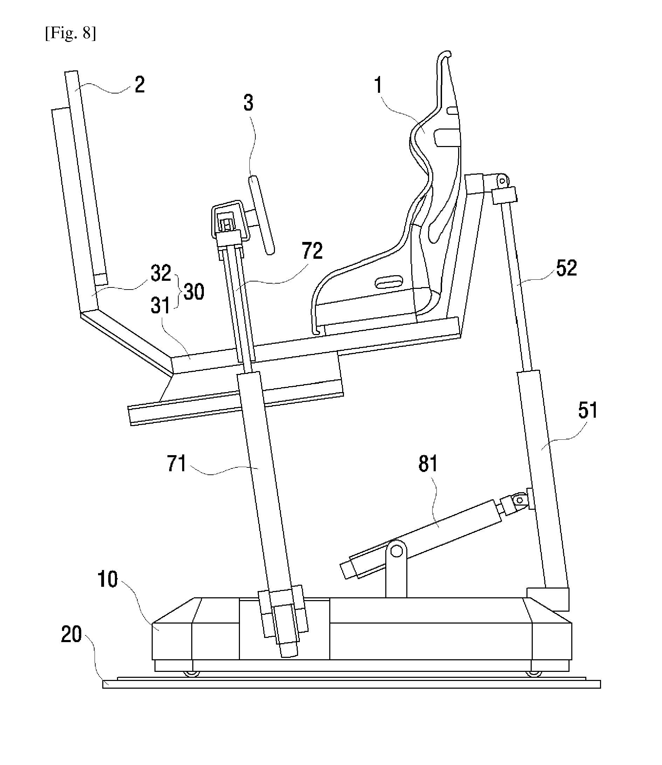

FIG. 8 is a view illustrating a state where the motion simulator is moved and tilted forward and ascends according to the first embodiment of the present invention.

As illustrated in FIG. 8, when the first, second, and third driving units of the first, second, and third link parts 50, 60, and 70 are driven to slide the first, second, and third rods 52, 62, and 72 upward, and the fourth driving unit of the fourth link part 80 is driven to slide the fourth rod 82 forward, the user may ascend upward and be in a forward tilted and moved state.

In this case, when a moving distance of the first rod 52 and moving distances of the second and third rods 62 and72 are adjusted, a forward tilted angle may be adjusted. Also, when a moving distance of the fourth rod 82 is adjusted, a distance in which the user moves forward may be adjusted.

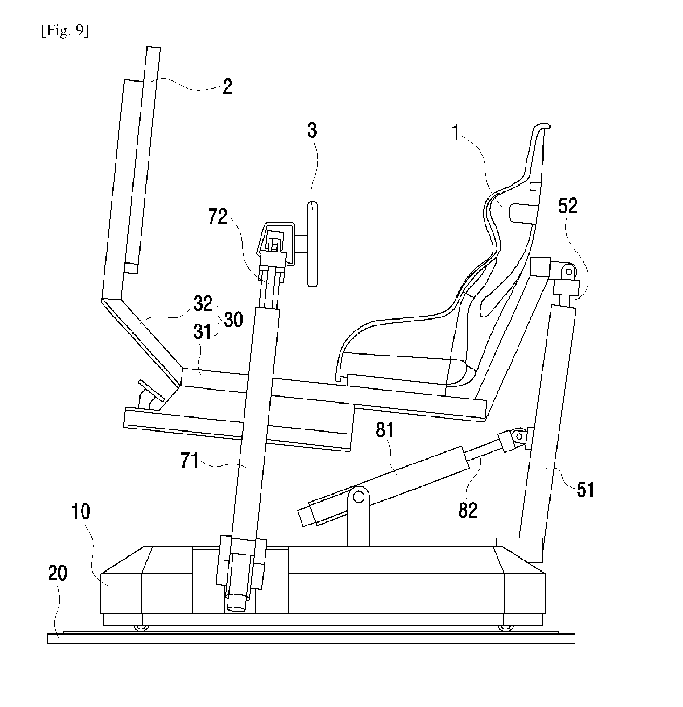

FIG. 9 is a view illustrating a state where the motion simulator is moved and tilted backward according to the first embodiment of the present invention.

As illustrated in FIG. 9, when the fourth driving unit of the fourth link part 80is driven to slide the fourth rod 82 backward and upward, the user may be in a backward moving state. In this case, when the second and third driving units of the second and third link parts 50 and 60 to slide the second and third rods 52 and 53 upward, a backward tilted angle may be adjusted.

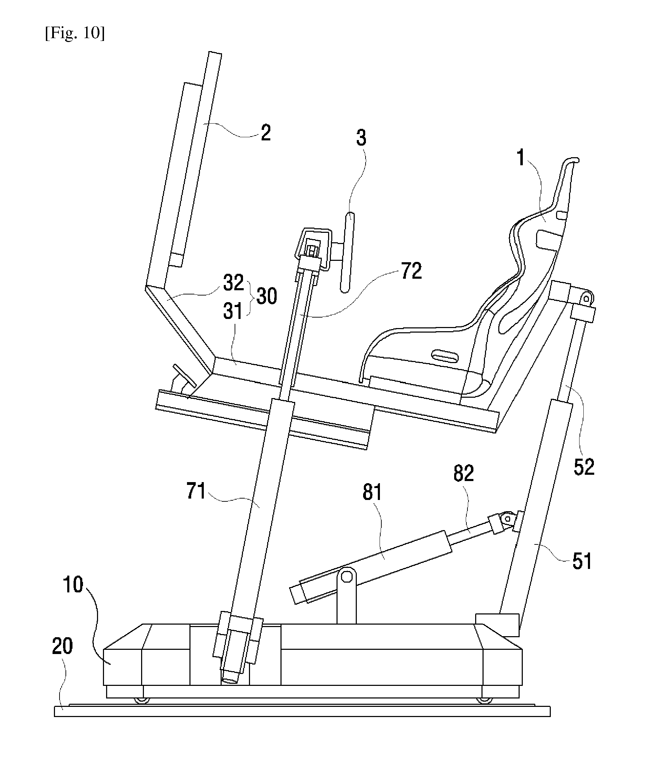

FIG. 10 is a view illustrating a state where the motion simulator is moved and tilted backward and ascends according to the first embodiment of the present invention.

As illustrated in FIG. 10, when the first, second, and third driving units of the first, second, and third link parts 50, 60, and 70 are driven to slide the first, second, and third rods 52, 62, and 72 upward, and the fourth driving unit of the fourth link part 80 is driven to slide the fourth rod 82 backward, the user may ascend upward and be in a backward tilted and moved state.

In this case, when a moving distance of the first rod 52 and moving distances of the second and third rods 62 and72 are adjusted, a backward tilted angle may be adjusted. Also, when a moving distance of the fourth rod 82 is adjusted, a distance in which the user moves backward may be adjusted.

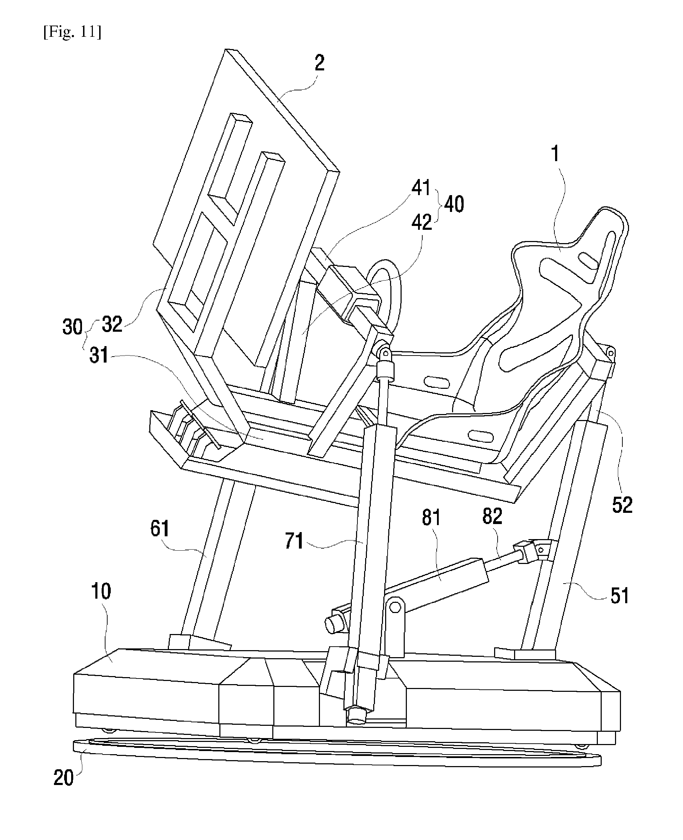

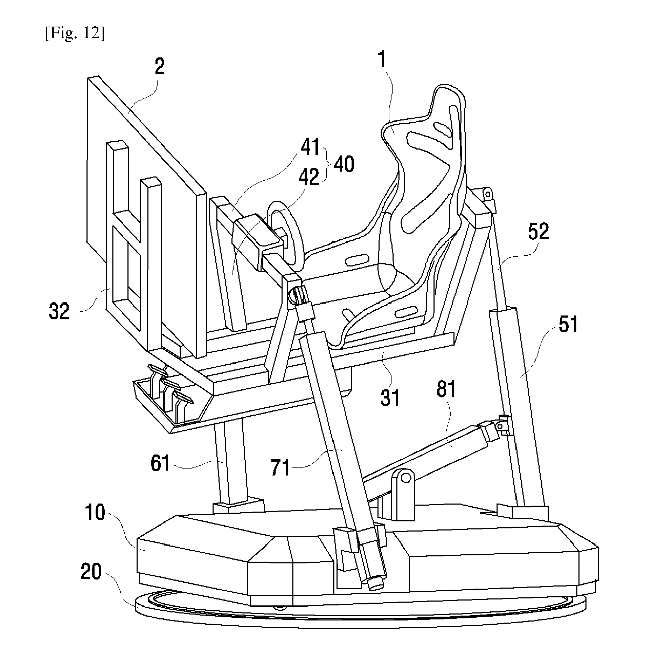

FIG. 11 is a view illustrating a state where the motion simulator is tilted to allow a right side thereof to ascend in a state where the motion simulator moves backward according to the first embodiment of the present invention, and FIG. 12 is a view illustrating a state where the motion simulator is tilted to allow the right side to ascend in a state where the motion simulator moves forward according to the first embodiment of the present invention.

As illustrated in FIGS. 11 and 12, when the fourth driving unit of the fourth link part 80 is driven to slide the fourth rod 82 backward or forward, and the second driving unit of the second link part 60 is driven to slide the second rod 62 upward, a right side of the user may ascends, and thus the user may be tilted.

Meanwhile, in order to integrally rotate the base frame 10 and the support members 30 and 40 to which the chair 1 and the monitor 2 are coupled, the rotation support plate 20 and the rotation driving unit may be provided. Here, when the rotation driving unit is driven, the rotation force may be transmitted to the base frame 10 to roll the wheels 11, and thus the base frame 10 may rotate while being guided by the rotation guide 21.

According to the present invention, the motion simulator may realize five degrees of freedom (five DOF) motion through linear motion in a forward/backward/upper/lower direction, rolling, pitching, and yawing. Thus, the user may experience a more realistic virtual environment.

### <Second Embodiment>

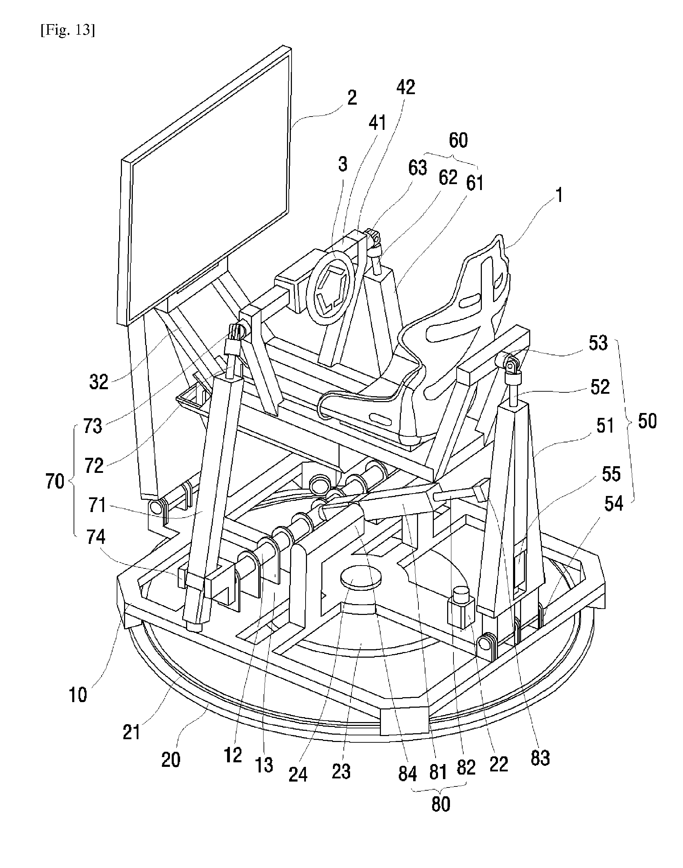

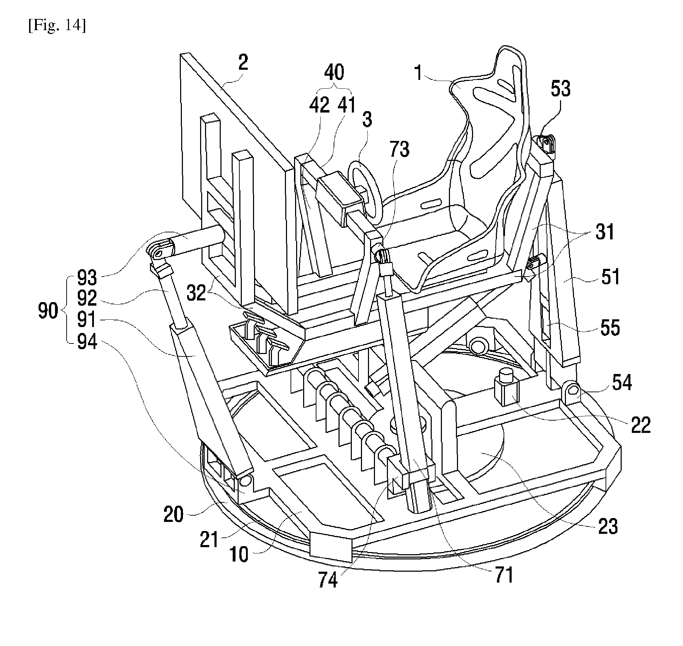

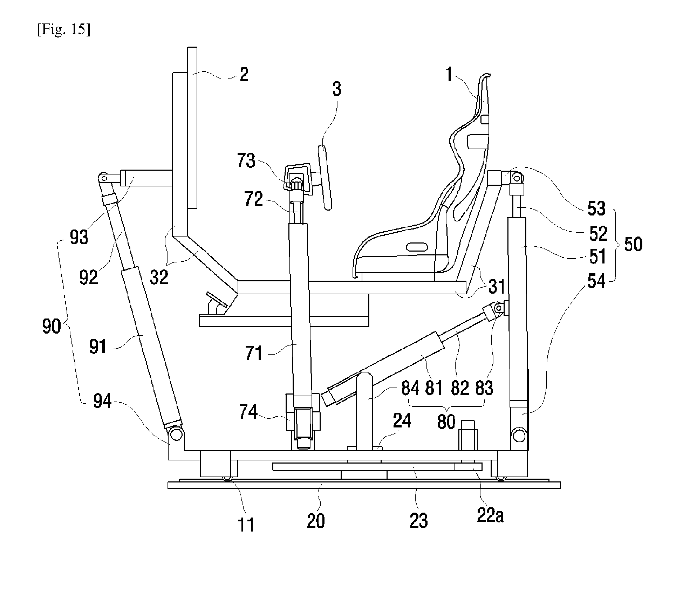

FIGS. 13 and 14 are perspective views of a motion simulator according to a second embodiment of the present invention, and FIG. 15 is a side view of the motion simulator according to the second embodiment of the present invention.

In the case of first embodiment, when the motion simulator rolls in a state where the user sits down on the chair, a force may be applied in the left/right direction to apply large torque to the first link part 50. Thus, the motion simulator may be reduced in durability. Thus, in the second embodiment, a motion simulator includes a fifth link part 50 to overcome the limitation.

In the second embodiment of the present invention, a motion simulator includes support members 30 and 40 to which a chair 1, a monitor 2, and a handle 3 are fixedly coupled and first, second, third, fourth, and fifth link parts 50, 60, 70, 80, and 90 which linearly and rotatably support the first and second support members 30 and 40.

The first link part 50 has a rolling and pitching-rotatable upper end connected to a rear side of the first support member 30 and a pitching-rotatable lower end connected to a rear side of the base frame 10. The first link part 50 includes a first link member 51 having a predetermined length, a first rod 52 inserted into the first link member 51 to vertically and linearly slide by driving of the first driving unit (not shown), a rolling and pitching-rotatable first upper connection member 53 disposed on an upper end of the first rod 52 and connected to a rear end of the first support member 30, and a first lower connection member 54 pitchably connecting a lower end of the first link member 51 to a rear end of the base frame 10.

In this case, when a force is applied to the simulator in a left/right direction while the simulator is operating, torque may be applied to the first link member 51. Thus, the first link member 51 may have a lower portion having a width greater than that of an upper portion thereof.

A motor 55 may be disposed within a body of the first link member 51 as a first driving unit. Since an axis of the motor 55 is connected to the first rod 52, when the motor 55 is driven, the first rod 52 may move up and down.

The second link part 60 includes a second link member 61 having a predetermined length, a second rod 62 inserted into the second link member 61 to vertically and linearly slide by driving of a second driving unit (not shown), a rolling and pitching-rotatable second upper connection member 63 disposed on an upper end of the second rod 62 and connected to a right end of the second support member 40, and a second lower connection member 64 rollably and pitchably connecting a lower end of the second link member 61 to a right end of the base frame 10.

The second lower connection member 64 may have one side connected to a rotation shaft 12 so that the second link member 61 pitches with respect to the base frame 10 and the other side connected to the lower end of the second link member 61 by using another rotation shaft (not shown) as a medium so that the second link member 61 may roll. Thus, the second link member 61 may roll and pitch.

The rotation shaft 12 may be disposed above the base frame 10 by a support plate 13.

The third link part 70 has the same constitutions as those of the second link part 60. The third link part 70 includes a third link member 71 having a predetermined length, a third rod 72 inserted into the third link member 71 to vertically and linearly slide by driving of a third driving unit (not shown), a rolling and pitching-rotatable third upper connection member 73 disposed on an upper end of the third rod 72 and connected to a left end of the second support member 40, and a third lower connection member 74 rollably and pitchably connecting a lower end of the third link member 71 to a left end of the base frame 10.

Like the second lower connection member 64, the third lower connection member 74 may be disposed between the third link member 71 and the base frame 10 so that the third link member 71 may roll and pitch with respect to the base frame 10. The third lower connection member 74 is connected to the rotation shaft 12 so that the third link member 71 may pitch.

The fourth link part 80 includes a fourth link member 81 having a predetermined length, a fourth rod 82 inserted into the fourth link member 81 to linearly slide in a vertically tilted direction by driving of a fourth driving unit (not shown), a pitching-rotatable fourth upper connection member 83 disposed on an upper end of the fourth rod 82 and connected to a body of the first link member 51, and a fourth lower connection member 84 connecting a lower end of the fourth link member 81 to a top surface of the base frame 10 so that the fourth link member 81 may pitch.

The fifth link part 90 includes a fifth link member 91 having a predetermined length, a fifth rod 92 inserted in to the fifth link member 91 to vertically slide, a fifth upper connection member 93 having one end pitchably connected to an upper end of the fifth rod 92 and the other end fixedly coupled to a front end of the first support member 30, and a fifth lower connection member 94 having one end pitchably connected to the fifth link member 91 and the other end fixedly coupled to the base frame 10.

In this case, when a force is applied to the simulator in a left/right direction while the simulator is operating, torque may be applied to the fifth link member 91. Thus, the fifth link member 91 may have a lower portion having a width greater than that of an upper portion thereof.

Although the first to fourth rods 51 to 81 are linearly moved by the first to fourth driving units, the fifth rod 92 may slide according to the motion in the up/down direction or the rotations of the support members 30 and 40 due to the driving force of the first to fourth driving units without providing a self-driving source. When the simulator rolls in a state where the user sits down on the chair, the force in the left/right direction may be applied to the simulator to apply large torque to the first link part 50. Thus, the simulator may be reduced in durability. However, the fifth link part 90 is provided to receive the torque together with the first link part 50, and thus the simulator may be improved in durability.

Meanwhile, the first upper connection member 53 disposed on the first link part 50 and the fifth upper connection member 93 disposed on the fifth link part 90 may be coaxially disposed. If the first upper connection member 53 and the fifth upper connection member 93 are disposed on axes different from each other, the first link member 51 and the fifth link member 91 may be twisted while the simulator is operating. Thus, in the current embodiment, the first upper connection member 53 and the fifth upper connection member 93 may be coaxially disposed to prevent the first and fifth link members 51 and 91 from being twisted.

A motor 22 on which a gear 22a is disposed on an end of a motor shaft may be fixedly coupled to the base frame 10 as a fifth driving unit. A gear connection plate 23 having a disc shape may be fixedly coupled to a central portion of a top surface of the rotation support plate 20 that is fixed to the ground, and a rotation shaft 24 may be fixedly coupled to an upper portion of the gear connection plate 23. A teeth shape may be formed on an outer circumferential surface of the gear connection plate 23 and engaged with the gear 22a of the motor 22.

When the motor 22 is driven, the gear 22a rotates, and the base frame 10 rotates with respect to the rotation shaft 24 because the gear 22a is engaged with the outer circumferential surface of the gear connection plate 23. Thus, all of the link parts and support members coupled to the upper portion of the base frame 10 may yaw.

In this case, the base frame 10 may rotate while the wheels 11 coupled to a lower portion of the base frame 10 are guided by the rotation guide 21 of the rotation support plate 20.

Hereinafter, motion of a motion simulator according to the second embodiment of the present invention will be described with reference to FIG. 15.

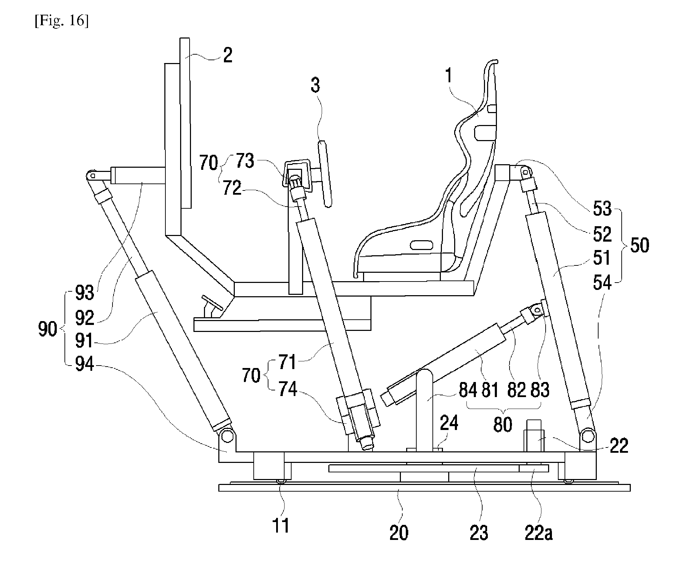

FIG. 16 is a view illustrating a state where the motion simulator is moved and tilted forward according to the second embodiment of the present invention.

As illustrated in FIG. 16, the fourth rod 82 may slide forward by driving of the fourth driving unit, and the first, second, and third link parts 50, 60, and 70 are in a pitching-rotating state in a counterclockwise direction. Thus, the fifth link part 90 may be in a pitching-rotating state, and the support members 30 and 40 may be in a forward moving state.

Here, when the first, second, and third driving units are driven to adjust positions of the first, second, and third rods 52, 62, and 72, vertical positions and tilted angles of the support members 30 and 40 may be adjusted.

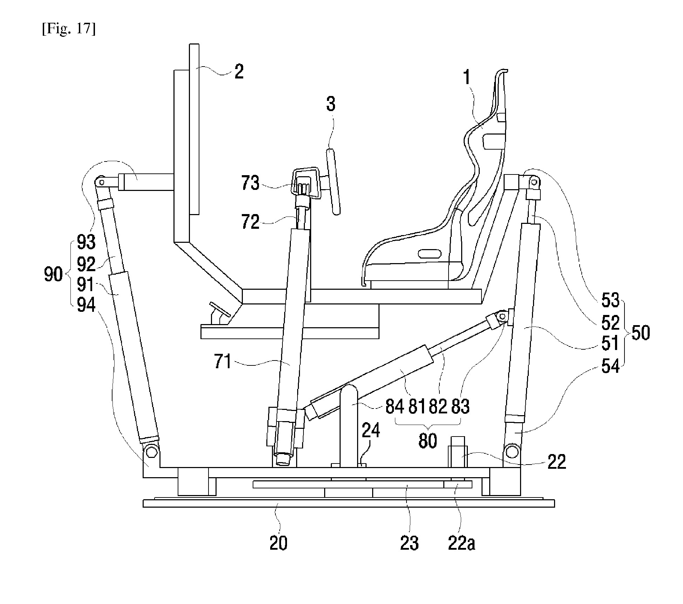

FIG. 17 is a view illustrating a state where the motion simulator is moved and tilted backward according to the second embodiment of the present invention.

As illustrated in FIG. 17, the fourth rod 82 may slide backward by driving of the fourth driving unit, and unlike the above-described state illustrated in FIG. 16, the first, second, and third link parts 50, 60, and 70 may be in a pitching-rotating state in a clockwise direction. Thus, the fifth link part 90 may be in a pitching-rotating state, and the support members 30 and 40 may be in a backward moving state.

In this case, when the first, second, and third driving units are driven to adjust positions of the first, second, and third rods 52, 62, and 72, vertical positions and tilted angles of the support members 30 and 40 may be adjusted.

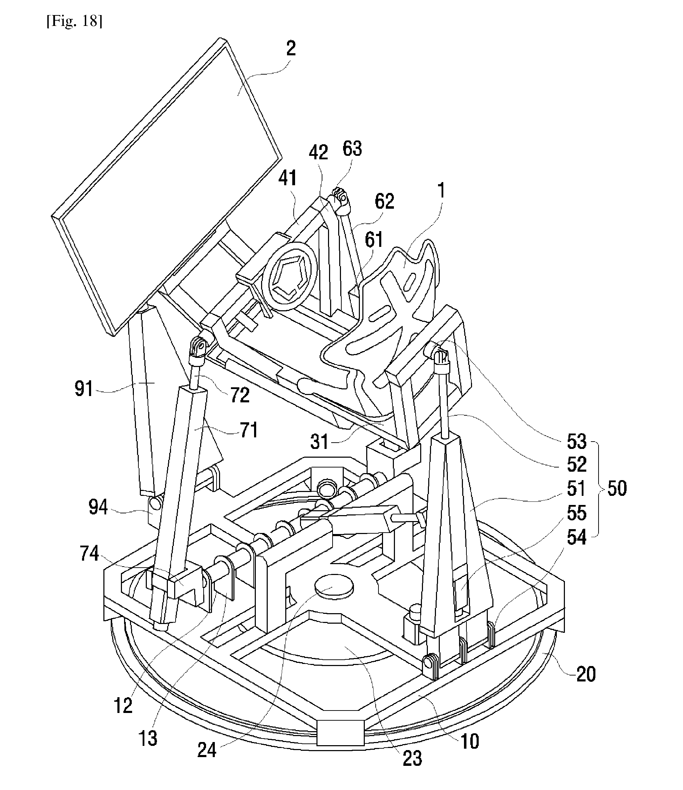

FIG. 18 is a view illustrating a state where the motion simulator is tilted to a right side thereof to ascend according to the second embodiment of the present invention.

When the second driving unit is driven to slide the second rod 62 upward, and the third driving unit is driven to slide the third rod 72 downward, right sides of the support members 30 and 40 may be tilted by ascending. Thus, the support members 30 and 40 may roll. In this case, the first upper connection member 53 may be hinge-coupled to the fifth upper connection member 93 so that the support members 30 and 40 roll. Also, the first upper connection member 53 and the fifth upper connection member 93 may be coaxially disposed to prevent the first link member 51 and the fifth link member 91 from being twisted.

Although a preferred embodiment of the present invention has been disclosed, various changes and modifications may be made thereto by one skilled in the art without departing from the scope and spirit of the invention as set forth in the appended claims. It is also understood that the terms used herein are merely descriptive, rather than limiting, and that various changes may be made without departing from the scope and spirit of the invention.

## Claims

1. A motion simulator comprising:
a base frame (10);
support members (30, 40) disposed above the base frame (10) to support a chair (1) on which a user sits down, a monitor (2) providing a virtual environment with an image according to manipulation by the user, and a handle (3) manipulated by the user to provide the virtual environment;
a first link part (50) having an upper end rollably and pitchably connected to a rear end of the support member and a lower end pitchably connected to a rear end of the base frame (10), the first link part (50) transmitting a power of a first driving unit to move the rear end of the support member upward and downward;
second and third link parts (60, 70) each of which has an upper end rollably and pitchably connected to both left and right ends of the support member and a lower end rollably and pitchably connected to left and right ends of the base frame (10), the second and third link parts (60, 70) transmitting powers of the second and third driving units to move both left and right sides of the support member upward and downward; and
a fourth link part (80) having both ends pitchably connected to the first link part (50) and the base frame (10), the fourth link part (80) transmitting a power of the fourth driving unit to pitch the first link part (50).

2. The motion simulator of claim 1, wherein the first to fourth driving units are disposed in the base frame.

3. The motion simulator of claim 1, wherein the first link part (50) comprises:
a first link member (51) having a lower end pitchably connected to the base frame (10); and
a first rod (52) sliding in the first link member (51) by the first driving unit, the first rod (52) having an upper end rollably and pitchably connected to the support member,
wherein the second and third link parts (60, 70) comprise:
second and third link members (61, 71) each of which has a lower end rollably and pitchably connected to the base frame (10); and
second and third rods (62, 72) respectively sliding in the second and third link members (61, 71) by the second and third driving units, the second and third rods (62, 72) being rollably and pitchably connected to the support member,
wherein the fourth link part (80) comprises:
a fourth link member (81) having one end pitchably connected to the base frame (10); and
a fourth rod (82) sliding in the fourth link member (81) by the fourth driving unit, the fourth rod (82) being pitchably connected to the first link member (51).

4. The motion simulator of claim 1, wherein the support member comprises:
a first support member (30) to which the chair (1) is coupled to a rear side thereof, and the monitor 2 is coupled to a front side thereof; and
a second support member (40) coupled to the handle (3), the second support member being integrally coupled to the first support member (30),
wherein the first link part (50) is rollably and pitchably connected to a rear end of the first support member (30), and
the second and third link parts (60, 70) are rollably and pitchably connected to both left and right ends of the second support member (40), respectively.

5. The motion simulator of claim 1, further comprising a fifth link part (90) having an upper end pitchably connected to a front end of the support members (30, 40) and a lower end pitchably connected to the base frame (10).

6. The motion simulator of claim 5, wherein the fifth link part (90) comprises:
a fifth link member (91) having a predetermined length;
a fifth rod (92) inserted into the fifth link member (91) to vertically slide;
a fifth upper connection member (93) having one end pitchably connected to an upper end of the fifth rod (92) and the other end fixedly coupled to the front end of the support member (30); and
a fifth lower connection member (94) having one end connected to the fifth link member (91) to pitch the fifth link member (91) and the other end fixedly coupled to the base frame (10),
wherein the fifth rod (92) vertically moves by the motion of the support members (30, 40) due to driving forces of the first to fourth driving units.

7. The motion simulator of claim 5, wherein the first link part (50) comprises:
a first link member (51) having a lower end pitchably connected to the base frame (10);
a first rod (52) sliding in the first link member (51) by the first driving unit; and
a first upper connection member (53) having one end rollably connected to a rear end of the support member and the other end pitchably connected to the first rod (52),
wherein the fifth link part (90) comprises:
a fifth link member (91) having a predetermined length;
a fifth rod (92) inserted into the fifth link member (91) to vertically slide;
a fifth upper connection member (93) having one end pitchably connected to an upper end of the fifth rod (92) and the other end fixedly coupled to a front end of the support member (30); and
a fifth lower connection member (94) having one end connected to the fifth link member (91) to pitch the fifth link member (91) and the other end fixedly coupled to the base frame (10),
wherein the first upper connection member (53) and the fifth upper connection member (93) are coaxially disposed.

8. The motion simulator of claim 7, wherein each of the first link member (51) and the fifth link member (91) has a lower portion having a width greater than that of an upper portion thereof.

9. The motion simulator of claim 1, further comprising a rotation support plate (20) supporting a lower portion of the base frame (10) and guiding rotation of the base frame (10) when the base frame (10) rotates by a rotation driving force of a rotation driving unit.
